Europäisches Patentamt

European Patent Office

Office européen des brevets

(19)

(11) Numéro de publication : **0 119 894**
**B1**

(12) **FASCICULE DE BREVET EUROPÉEN**

(45) Date de publication du fascicule du brevet :
16.06.87

(21) Numéro de dépôt : 84400350.9

(22) Date de dépôt : 21.02.84

(51) Int. Cl.⁴ : **F 02 M 47/02**

(54) **Perfectionnement aux systèmes d'injection à commande électromagnétique pour moteur Diesel de type pression-temps où l'aiguille de l'injecteur est pilotée par la décharge puis la charge d'une capacité.**

(30) Priorité : 21.02.83 FR 8302792

(43) Date de publication de la demande :
26.09.84 Bulletin 84/39

(45) Mention de la délivrance du brevet :
16.06.87 Bulletin 87/25

(84) Etats contractants désignés :
AT BE CH DE GB IT LI NL SE

(56) Documents cités :
EP-A- 0 050 710
EP-A- 0 056 916
EP-A- 0 084 662
DE-A- 2 051 944
FR-A- 2 190 167

(73) Titulaire : REGIE NATIONALE DES USINES RENAULT
Boîte postale 103 8-10 avenue Emile Zola
F-92109 Boulogne-Billancourt (FR)

(72) Inventeur : Jourde, Jean-Pierre
30, rue Chazière Le Tulipier No. 2
F-69004 Lyon (FR)
Inventeur : Campo-Garraza, Pedro
5 A, rue Claude Baudrand
F-69300 Caluire (FR)
Inventeur : Miettaux, Marc
18, Avenue des Platanes
F-69150 Decines (FR)
Inventeur : Michaux, Thierry
5, rue Pauvelin
F-69110 Sainte Foy les Lyon (FR)

(74) Mandataire : Colas, Jean-Pierre et al
Cabinet de Boisse 37, avenue Franklin D. Roosevelt
F-75008 Paris (FR)

Jouve, 18, rue St-Denis, 75001 Paris, France

## Description

La présente invention concerne un perfectionnement aux systèmes d'injection de carburant à commande électromagnétique pour moteurs Diesel, où il est prévu que l'aiguille d'injecteur ou pulvérisateur soit ouverte par la chute de pression d'une capacité de commande par l'intermédiaire d'une conduite de décharge et fermée par la remise en pression de ladite capacité, la décharge et la charge de la capacité étant réalisées à l'aide d'une électrovanne.

De telles soupapes d'injection de carburant peuvent être communément appelées « injecteur à pression constante » puisque c'est la pression qui règne en permanence en amont du siège de l'aiguille d'injecteur qui permet à l'aiguille de se lever lorsque la capacité de commande située en dessus de ladite aiguille est déchargée. De nombreux brevets font état de tels systèmes d'injection mais on peut leur faire deux reproches principaux.

Tout d'abord, ces systèmes d'injection employés sur des moteurs à injection directe donnent très souvent lieu à une combustion très bruyante ; en effet, le gradient du débit instantané ou taux d'introduction est très élevé dès le début de l'injection puisque la haute pression constante est immédiatement présente en amont des trous de pulvérisation du combustible, ce qui a pour conséquence d'entraîner l'introduction d'une grande quantité de combustible dans la chambre de combustion avant le début d'inflammation ; le combustible présent dans le cylindre à l'instant d'inflammation se trouvant en plus grande quantité qu'avec un système d'injection classique, le gradient de la pression cylindre est très élevé en début de combustion, ce qui a pour conséquence de la rendre bruyante.

Ensuite, le pilotage par une électrovanne est généralement tel que l'ouverture de l'aiguille d'injecteur est souvent conjointe avec le mouvement de l'électrovanne, ce qui occasionne des difficultés pour pouvoir dominer le dosage stable et répétitif des très petites quantités injectées.

Le document FR-A-2 190 167 tente de remédier à ces inconvénients au moyen d'un système d'injection de carburant à commande électromagnétique pour moteur Diesel, du type comprenant une aiguille d'injecteur entourée d'une capacité à laquelle est appliquée en permanence la haute pression du combustible à injecter, un piston de commande de l'aiguille délimitant à son extrémité opposée à l'aiguille une cavité de commande, une électrovanne pour commander sélectivement la fermeture et l'ouverture de l'aiguille par application de la haute pression du combustible à la cavité et par chute de la pression dans la cavité respectivement, et des moyens d'étranglement interposés entre l'électrovanne et la cavité de commande et agencés pour retarder la chute de pression dans la cavité à l'ouverture de l'aiguille sans agir dans le sens assurant l'application de la haute pression à la cavité.

Malgré les progrès apportés par le système décrit au document précité, celui-ci ne permet pas réellement, comme c'est le but de l'invention, d'une part de moduler la loi d'injection et de la transformer en loi trapézoïdale au lieu d'une loi presque rectangulaire, et d'autre part, d'assurer une maîtrise complète des petits débits injectés, autorisant même la réalisation de pré-injection, c'est-à-dire, autorisant l'injecteur à fonctionner deux fois pour la même injection, une première fois avant le délai d'inflammation pour introduire une très petite quantité de combustible, et une deuxième fois pour permettre l'introduction de la grande partie du combustible, cette dernière introduction débutant presque en phase avec l'inflammation.

Suivant l'invention, ce but est atteint au moyen d'un système d'injection tel que défini dans la revendication 1, grâce auquel les volumes morts de combustible soumis à compression lors de l'ouverture et de la fermeture de l'aiguille sont minimisés. Ceci se traduit, après une phase initiale très courte, par une diminution sensible de la vitesse d'ouverture de l'aiguille, coexistant avec une vitesse de fermeture au contraire très élevée. Les débits injectés sont donc bien maîtrisés.

Par ailleurs, il est déjà connu par le document DE-A-2 051 944 de ralentir la levée de l'aiguille au moyen d'un clapet à bille. Toutefois, ce clapet n'introduit pas de perte de charge entre la cavité de commande du piston et la décharge et son fonctionnement ne peut donc pas être assimilé à celui de la présente invention.

Enfin, le document EP-A-0 084 662, qui constitue un état de la technique selon l'article 54(3) de la CBE, montre un système d'injection équipé d'un clapet qui, percé d'un ajustage, présente une conformation d'apparence similaire à celle du clapet de l'invention. Le fonctionnement en est néanmoins complètement différent car le système d'injection de ce document n'est pas du type dont l'aiguille est entourée d'une capacité à laquelle est appliquée en permanence la haute pression du combustible à injecter. L'ouverture de l'aiguille est obtenue par application de la haute pression à une cavité de commande contenant le clapet, qui a pour effet de ralentir initialement la levée de l'aiguille. Au contraire, suivant l'invention, l'ouverture est obtenue par mise en communication de la cavité de commande avec la décharge et le clapet a pour rôle, après une période initiale très courte d'ouverture rapide, de limiter la vitesse de levée de l'aiguille sur le reste de sa course.

D'autres particularités apparaîtront dans la description qui va suivre d'un mode de réalisation pris comme exemple et illustré sur le dessin annexé, sur lequel :

la figure 1 est un schéma simplifié correspondant à un des injecteurs ;

les figures 2a, 2b, 2c représentent les courbes de variation en fonction du temps, respectivement de la tension de commande de l'électrovanne, des pressions et de la levée d'aiguille ; et

les figures 3a, 3b, 3c, 3d ces mêmes courbes de variation, respectivement de la tension et du courant de commande, des pressions et de la levée d'aiguille, dans le cas d'une injection avec pré-injection.

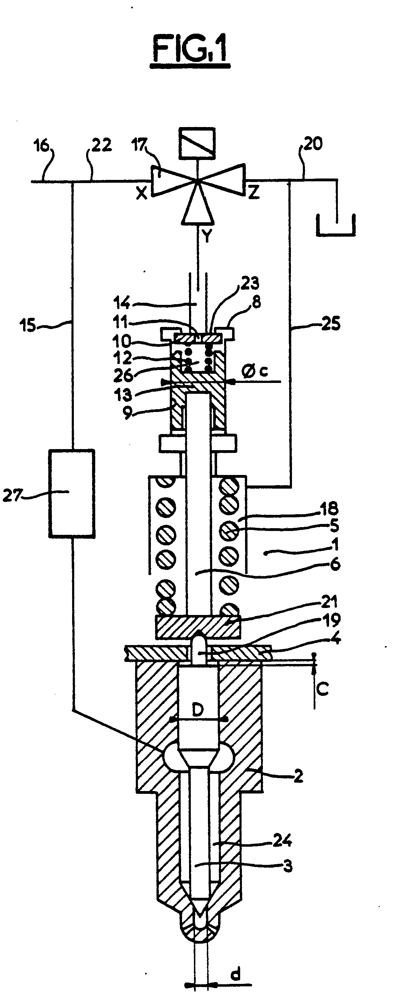

Comme illustré sur la figure 1, le dispositif est constitué classiquement d'un corps 1 non détaillé ici dans lequel peuvent se monter un injecteur classique 2 et son aiguille 3. Une cale 4, judicieusement disposée, permet de réaliser la butée de l'aiguille 3. Le corps 1 est encore agencé pour recevoir une électrovanne à trois voies 17 et il comporte par ailleurs un alésage 9 dans lequel est monté un piston 13. En outre, dans l'axe de l'alésage 9, un logement 18 est ménagé dans le corps 1 lui permettant de recevoir un ressort 5, dit ressort de tarage, qui prend appui sur le fond supérieur du logement 18 et agit sur une collerette 21 solidaire d'un poussoir 6, lequel pousse sur le sommet 19 de l'aiguille 3 de l'injecteur 2. Le fond 8 de l'alésage 9 est spécialement agencé d'une part, pour être en communication par le conduit 14 avec la sortie Y de l'électrovanne trois voies 17 et, d'autre part, pour former appui à un clapet 10, percé par un ajutage 11 et qui, en position de repos, est en appui sur une portée plane 23, perpendiculaire à l'axe dudit alésage 9, grâce à un ressort 12 prenant appui sur la tête d'un piston 13 spécialement aménagée.

Le corps 1 comprend également un conduit d'arrivée 16 par lequel pénètre le combustible sous haute pression constante, cette pression étant fournie par un système de pompe et de régulateur de pression, non représenté ici. Du conduit 16 partent deux dérivations, une première 22 permettant au combustible sous haute pression de pénétrer dans l'électrovanne trois voies par son entrée X et une seconde 15 permettant au combustible d'arriver dans la capacité 24 située autour de l'aiguille 3 dans l'injecteur 2.

Le corps 1 comprend encore un conduit 20 relié au retour au réservoir et qui est lui-même en liaison avec la sortie Z de l'électrovanne trois voies ainsi qu'avec le conduit 25 relié à la chambre 18. Enfin, pour comprendre le fonctionnement, il faut également préciser que l'électrovanne 17 est agencée de telle manière qu'en position de repos, c'est-à-dire non électriquement excitée, les conduits X et Y sont en liaison directe autorisant le combustible sous pression, pénétrant dans le corps 1 et par le conduit 16, à arriver dans le conduit 14 et qu'inversement en position excitée par un courant électrique, son entrée X est obturée tandis que Y et Z sont en relation autorisant une communication entre le conduit 14 et le retour aux fuites 20.

Le corps 1 est par ailleurs, spécialement agencé pour comporter une capacité 27 en série sur le conduit 15 et placée selon la conception de l'injecteur 2 le plus près possible de la capacité 24 située autour de l'aiguille 3.

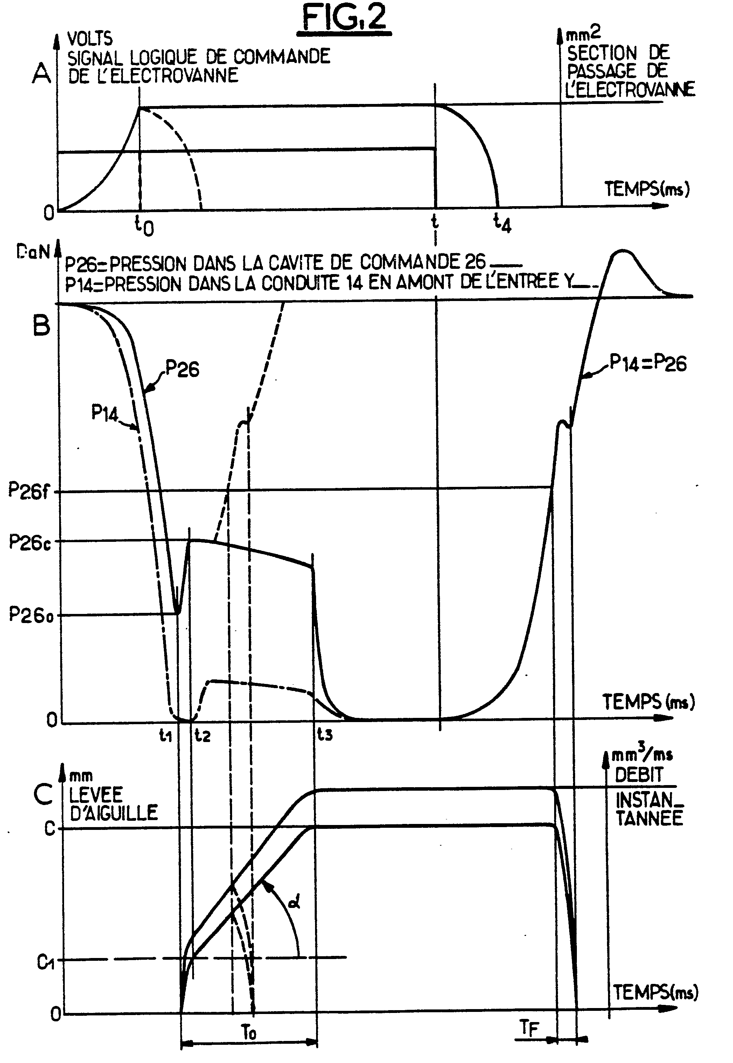

A l'aide des fig. 2a à 2c, on comprendra mieux le fonctionnement. Le système étant au repos sous pression P, l'aiguille 3 est en appui sur son siège avec une force fr telle que :

$$f_r = F_R + \frac{\pi}{4} \phi_c^2 \cdot P - \frac{\pi}{4} (D^2 - d^2) P$$

$F_R$ étant la force du ressort, d et D les diamètres respectifs de l'aiguille à son siège et à son guidage et $\varnothing_c$ le diamètre du piston 13 dit piston de commande. Cet équilibre peut se réaliser car conjointement à la présence de combustible sous haute pression dans la capacité 24, la même haute pression P est établie dans la chambre de commande 26 formée par le haut du piston 13 et le fond de l'alésage 9. Théoriquement, il y aurait lieu de rajouter à cette force fr la force développée par le ressort 12 mais ce dernier développe des efforts négligeables par rapport à $F_R$ et aux effets de la pression sur le piston 13.

Lorsque le courant est établi dans la bobine de l'électrovanne 17 l'injection se déroule de la manière suivante :

l'électrovanne a pour rôle de bloquer le passage du combustible de X vers Y et de permettre au combustible de passer de Y vers Z, donc conjointement à l'augmentation de surface de la section de passage de Y vers Z, la pression dans la conduite 14 chute,

du fait de l'ajutage 11 ménagé dans le clapet 10, la pression dans la cavité de commande 26 chute relativement lentement, et lorsque cette pression atteint une valeur $P_{26,0}$ telle que

$$\frac{\pi}{4} \phi_c^2 P_{26,0} = \frac{\pi}{4} (D^2 - d^2) P - F_R$$

c'est-à-dire lorsque les forces sur les pièces mobiles 3, 6 et 13 s'équilibrent, l'aiguille d'injecteur commence à s'ouvrir.

Dès que l'aiguille s'est levée d'une faible hauteur, son mouvement est accéléré par une force supplémentaire égale à $\pi/4 \, d^2 \, P$ due à la pression sur la surface de son siège.

Comme dans le fonctionnement d'une aiguille d'injecteur d'un système d'injection classique, cette force devrait accélérer très rapidement l'aiguille d'injecteur, mais l'ajutage 11 du clapet 10 est judicieusement dimensionné pour laminer le débit de combustible refoulé de la capacité 26, c'est-à-dire que du temps $t_1$ au temps $t_2$, comme on peut le voir sur la fig. 2, soit une course de l'aiguille correspondante à $C_1$, cette dernière par l'intermédiaire du piston 13 comprime le volume de la capacité 26, puis c'est ensuite le débit du combustible à travers l'ajutage 11 qui limite la vitesse de déplacement de l'ensemble aiguille 3, poussoir 6 et piston 13. Après la levée très rapide de $t_1$ à $t_2$ on a donc une levée

3

**0 119 894**

beaucoup plus lente de $t_2$ à $t_3$, la pente $\alpha$ de la courbe de levée de l'aiguille en fonction du temps pouvant aisément être modulée par ajustement du diamètre de l'ajutage 11 : plus l'ajutage est petit, plus l'angle $\alpha$ sera petit et plus il est grand, plus la montée de l'aiguille sera rapide.

En fonction de ce qui précède, on peut comprendre la très grande importance du volume de la capacité de commande 26 et du dimensionnement des différentes pièces du système, en particulier du diamètre du piston 13, pour que les performances précédentes soient garanties en fonction des diamètres D et d d'aiguille d'injecteurs classiques du commerce.

Une fois l'aiguille levée, la pression P régnant dans la capacité 26 tombe à la pression de fuites.

En fin d'injection, l'excitation de l'électrovanne est interrompue au temps t et le combustible sous haute pression entrant dans l'électrovanne par X et sortant par Y est conduit par le conduit 14 au-dessus du clapet plan 10. Le ressort 12 étant très faible, il se trouve immédiatement comprimé et le clapet plan 10 vient en appui sur la tête du piston dégageant totalement toute la section du conduit 14 et autorisant ainsi la haute pression de combustible à s'exercer sur toute la surface du piston 13. Lorsque la pression atteint un niveau $P_{26,f}$ tel que :

$$\frac{\pi}{4} \, \phi_c^2 \, P_{26,f} + F_R + kC = \frac{\pi}{4} D^2 P$$

(k étant la constante du ressort et C la levée de l'aiguille d'injecteur), l'injecteur commence à se refermer, fermeture qui est très rapide puisque la pression dans la chambre 26 augmente très rapidement, la pleine section de passage de l'électrovanne de X vers Y étant découverte.

Sur les fig. 2a à 2c on peut par ailleurs voir que si l'on excite l'électrovanne pendant un temps t correspondant uniquement à son temps de réponse, c'est-à-dire, un temps tel qu'elle puisse pleinement s'ouvrir puis immédiatement se refermer, on est capable de dominer de très courtes levées d'aiguille correspondant à de très faibles quantités injectées, ceci à condition que les performances du type d'électrovanne utilisé soient suffisantes et que l'ensemble du système soit judicieusement dimensionné pour que l'aiguille de l'injecteur ne commence son mouvement qu'après le mouvement propre de l'électrovanne.

On constate sur la fig. 2c que le temps To d'ouverture de l'aiguille 3 d'injecteur est supérieur au temps $T_F$ de fermeture de ladite aiguille. C'est la caractéristique de dynamique d'un système dit à « zéro » positif, c'est-à-dire dont la courbe caractéristique débit par coup en fonction du temps d'ouverture pour ledit débit est linéaire hors de sa partie balistique et que le prolongement de ladite partie linéaire coupe l'axe des temps à une valeur positive, il est connu en effet, que seuls les systèmes ayant une telle dynamique peuvent autoriser des très faibles débits stables et répétitifs.

Sur la fig. 2b est par ailleurs représentée pour mémoire l'allure de la pression $P_{14}$ dans le conduit 14 en amont de l'entrée Y de l'électrovanne ; on peut voir que si cette pression chute plus rapidement que la pression $P_{26}$ à l'ouverture de l'injecteur, elle est confondue avec $P_{26}$ à la fermeture de l'aiguille de l'injecteur.

Selon la description précédente, on peut simplifier dans une première approximation, le mouvement de l'aiguille en énonçant que le mouvement de l'aiguille est une fonction directement dépendante du débit q qui passe dans l'ajutage 11 pendant l'ouverture de l'aiguille d'injecteur. Ce débit est de la forme :

$$q = \beta S \sqrt{\frac{2(P_{26} - P_{14})}{\rho}}$$

$\beta$ étant le coefficient de débit de l'ajutage 11 de section S et $\rho$ la masse volumique du combustible, elle-même fonction de la température et de la pression du combustible. On voit donc qu'en faisant varier la section S de l'ajutage 11, on peut aisément faire varier la pente $\alpha$ de la courbe de levée d'aiguille, ce qui modifie le débit instantané ou le taux d'introduction en début d'injection.

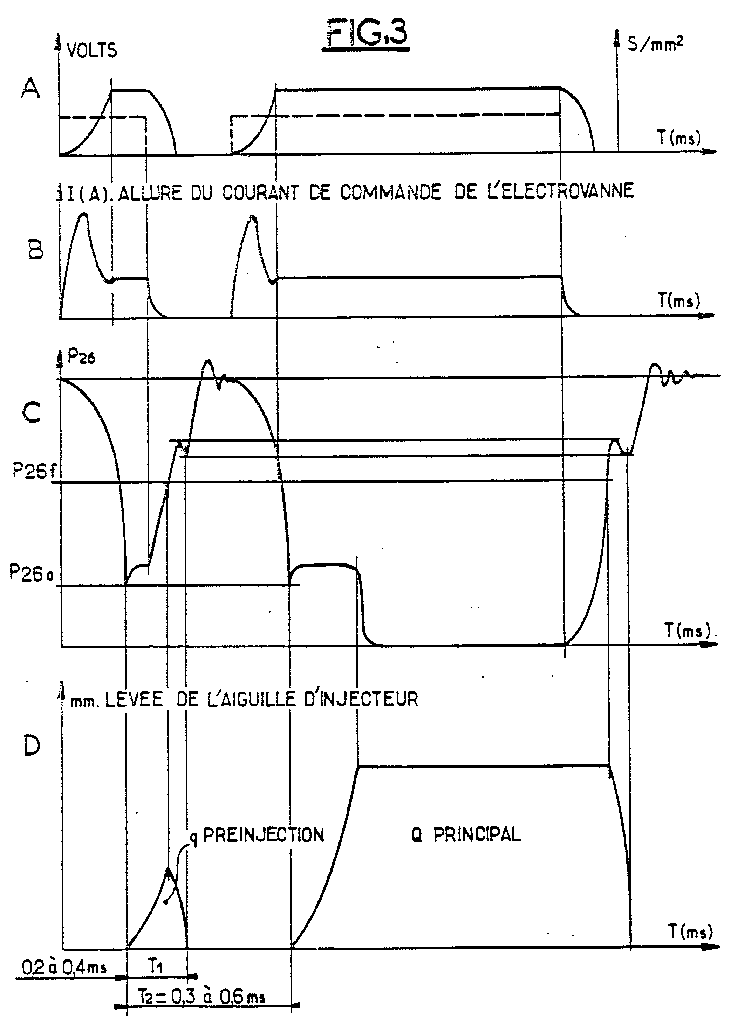

Les fig. 3a à 3d illustrent l'application de l'invention du perfectionnement à un système du même type utilisant le fonctionnement avec pré-injection, particulièrement approprié puisque l'invention permet de dominer parfaitement le dosage des petites quantités injectées et de le faire très rapidement. La théorie et la technique de pré-injection sont connues mais difficilement réalisables avec un système mécanique. On peut résumer simplement son fonctionnement en disant que l'on injecte tout d'abord une petite quantité q de combustible avec un calage d'avance classique, puis, dès que cette petite quantité est enflammée, on injecte très rapidement la quantité principale Q de combustible, c'est-à-dire que l'injection principale a lieu après le début de la première injection, le temps entre le début des deux injections étant de l'ordre de grandeur du délai d'inflammation, c'est-à-dire pour des moteurs de voitures particulières ou de véhicules industriels, un temps de l'ordre de 400 à 600 microsecondes, temps fonction bien évidemment des conditions de charge et de vitesse du moteur.

La fig. 3a donne les signaux de commande de l'électrovanne et les évolutions de ses sections de passage, à titre indicatif.

La fig. 3b donne une solution possible pour l'allure du courant de commande de l'électrovanne.

La fig. 3c donne la variation de pression dans la cavité de commande 26, et la fig. 3d, les mouvements

4

correspondants de l'aiguille dont on peut déduire simplement, par analogie avec la fig. 2c, le taux d'introduction.

Pour une telle utilisation, on a intérêt à ce que l'injection principale Q soit la plus rectangulaire possible de façon à injecter la quantité correspondante très rapidement. L'ajutage 11 du clapet 10 doit alors être assez grand pour que la pente α soit élevée. Il est à remarquer que, pour garantir un fonctionnement stable même dans cette condition de fonctionnement, l'électrovanne est toujours pleinement ouverte avant le début de levée d'aiguille. Par ailleurs, le corps 1 est spécialement agencé avec la capacité 27 qui a pour rôle de minimiser la chute de pression d'alimentation à l'ouverture de l'injecteur et d'amortir les phénomènes de coup de bélier aux ouvertures et fermetures successives de l'aiguille d'injecteur.

## Revendications

1. Système d'injection de carburant à commande électromagnétique pour moteur Diesel, comprenant une aiguille (3) d'injecteur entourée d'une capacité (24) à laquelle est appliquée en permanence la haute pression du combustible à injecter, un piston (13) de commande de l'aiguille (3) délimitant à son extrémité opposée à l'aiguille une cavité de commande (26), une électrovanne (17) pour commander sélectivement la fermeture et l'ouverture de l'aiguille (3) par application de la haute pression du combustible à la cavité (26) et par chute de la pression dans la cavité respectivement, et des moyens d'étranglement (10, 11, 12) interposés entre l'électrovanne (17) et la cavité de commande (26) et agencés pour retarder la chute de pression dans la cavité à l'ouverture de l'aiguille sans agir dans le sens assurant l'application de la haute pression à la cavité, caractérisé en ce que lesdits moyens comprennent, d'une part, un clapet (10) logé dans la cavité de commande (26) et sollicité par un faible ressort (12) vers une position de fermeture d'un conduit (14) susceptible d'être mis sélectivement en communication avec la haute pression et avec la décharge par l'électrovanne (17) à trois voies et, d'autre part, un ajutage (11) percé à travers le clapet (10) et dont la faible section est fonction de la loi d'injection désirée, ledit clapet (10) étant apte à être repoussé de son siège à l'encontre du ressort (12) sous l'effet de la haute pression appliquée au conduit (14) et à s'appuyer sur la tête du piston (13) et, la haute pression dans la cavité (26) agissant directement sur le piston (13), tandis que, sous l'effet de la mise en communication du conduit (14) avec la décharge, la levée de l'aiguille (3) et du piston (13), provoquant la compression du combustible contenu dans la cavité (26) qui tend à plaquer le clapet (10) contre son siège, est ralentie par l'écoulement réduit dudit combustible à travers l'ajutage (11) de faible section.

2. Système d'injection selon la revendication 1, caractérisé en ce que le ressort (12) est disposé entre le clapet (10) et la tête du piston (13).

3. Système d'injection selon l'une des revendications précédentes, caractérisé par le fait que le corps d'injecteur comporte une capacité d'amortissement (27) voisine de la capacité (24) entourant l'aiguille (3) et de l'orifice d'injection.

4. Système d'injection selon l'une des revendications précédentes, caractérisé par le fait que ses constituants sont choisis et dimensionnés de telle manière que son temps minimum de fonctionnement pour une ouverture et une fermeture immédiate soit de l'ordre de 200 micro-secondes.

5. Système d'injection selon la revendication 4, caractérisé par le fait qu'il est agencé pour fonctionner en pré-injection, le début de l'injection principale (Q) intervenant 400 à 600 microsecondes après le début de la pré-injection (q).

## Claims

1. An electromagnetically driven fuel injection system for a diesel engine, comprising an injector needle (3) surrounded by a chamber (24) to which the high pressure of the fuel to be injected is permanently applied, a drive piston (13) for the needle (3) formed with a drive recess (26) at its end opposite the needle, an electrically operated valve (17) to selectively operate the closing and opening of the needle (3) by application of the high pressure of the fuel to the recess (26) and by decrease of the pressure in the recess respectively, and throttling means (10, 11, 12) interposed between the electrically operated valve (17) and the drive recess (26) and arranged to slow down the decrease in pressure in the recess on opening of the needle without acting in the sense causing application of high pressure to the recess, characterised in that the said means comprise, on the one part, a valve (10) housed in the drive recess (26) and urged by a weak spring (12) towards the closed position of a drive (14) capable of being coupled selectively with the high pressure and with the discharge through the electrically operated valve (17) having three ducts and, on the other part, a nozzle (11) extending through the valve (10) and the small section of which is dependent on the injection law, said valve (10) being capable of being pushed backwards of its seating against the spring (12) under the effect of the high pressure applied to the drive (14) and of pressing on the head of the piston (13), and the high pressure in the recess (26) acting directly upon the piston (13), whilst, under the effect of the coupling of the drive (14) with the discharge, the lift of the needle (3) and of the piston (13), causing compression of the fuel contained in the recess (26) which

# 0 119 894

tends to flatten the valve (10) against its seating, is slowed down by the reduced outflow of said fuel through the nozzle (11) of small section.

2. An injection system according to claim 1, characterised in that the spring (12) is disposed between the valve (10) and the head of the piston (13).

3. An injection system according to one of the preceding claims, characterised by the fact that the body of the injector comprises a damping chamber (27) adjacent to the chamber (24) surrounding the needle (3) and to the injection port.

4. An injection system according to one of the preceding claims, characterised by the fact that its components are selected and sized in such a way that the minimum operating time for one opening and one immediate closing is of the order of 200 microseconds.

5. An injection system according to claim 4, characterised by the fact that it is arranged to operate in pre-injection, the start of the main injection (Q) occurring 400 to 600 microseconds after the start of the pre-injection (q).

## Patentansprüche

1. Elektromagnetisch gesteuertes Kraftstoff-Einspritzsystem für Dieselmotoren, mit einer Einspritznadel (3), die von einem Raum (24) umschlossen ist, dem ständig der hohe Druck des einzuspritzenden Kraftstoffs zugeführt wird, mit einem die Nadel (3) steuernden Kolben (13), der an seinem der Nadel gegenüberliegenden Ende eine Steuerkammer (26) begrenzt, mit einem Magnetventil (17) zum selektiven Steuern des Schließens und Öffnens der Nadel (3) durch Aufbau des Kraftstoff-Hochdruckes in der Steuerkammer (26) bzw. durch Druckabfall darin, und mit zwischen dem Magnetventil (17) und der Steuerkammer (26) so angeordneten Drosseleinrichtungen (10, 11, 12), daß der Druckabfall in der Kammer beim Nadel-Öffnen verzögert wird, ohne in Richtung auf Aufbau von hohem Druck in der Kammer zu wirken, dadurch gekennzeichnet, daß die Drosseleinrichtungen einerseits ein in der Steuerkammer (26) befindliches Ventil (10) aufweisen, das von einer schwachen Feder (12) zu einer Schließlage einer Leitung (14) belastet ist, die über das Magnetventil (17) wahlweise mit dem druckseitigen Zulauf und dem Ablauf verbindbar ist, und andererseits einen das Ventil (10) durchsetzenden Ansatz (11) von geringem, den gewünschten Einspritzverlauf steuerndem Querschnitt, wobei das Ventil (10) von seinem Sitz entgegen der Kraft der Feder (12) unter dem in der Leitung (14) stehenden hohen Druck abhebbar und an den Kopf des Kolbens (13) andrückbar ist, sodass auf dem Kolbem der Hochdruck in der Kammer (26) unmittelbar wirkt, während die Anhebung der Nadel (3) sowie des Kolbens (13), welche die Kompression des in der Kammer (26) befindlichen Kraftstoffes bewirkt, wodurch das Ventil (10) gegen seinen Sitz gedrückt wird, dank der Abflußbegrenzung dieses Kraftstoffes durch den Ansatz (11) von geringem Querschnitt hindurch verlangsamt wird, wenn die Leitung (14) mit dem Ablauf verbunden ist.

2. Einspritzsystem nach Anspruch 1, dadurch gekennzeichnet, daß die Feder (12) zwischen dem Ventil (10) und dem Kopf des Kolbens (13) angeordnet ist.

3. Einspritzsystem nach einem der vorhergehenden Ansprüche, dadurch gekennzeichnet, daß die Einspritzdüse einen Dämpfungsraum (27) neben dem die Nadel (3) sowie die Einspritzöffnung umschließendem Raum (24) aufweist.

4. Einspritzsystem nach einem der vorhergehenden Ansprüche, gekennzeichnet durch solche Auswahl und Bemessung seiner Bestandteile, daß die Mindestdauer für eine Öffnung und eine sofortige Schließung in der Größenordnung von 200 µs liegen.

5. Einspritzsystem nach Anspruch 4, dadurch gekennzeichnet, daß es zusammen mit einer Voreinspritzung betätigbar ist, wobei das Haupteinspritzvolumen 400 µs bis 600 µs nach dem Beginn der Voreinspritzung (q) ankommt.

6

0 119 894

# FIG.1

0 119 894

FIG.2

**A**

VOLTS
SIGNAL LOGIQUE DE COMMANDE
DE L'ELECTROVANNE

mm2
SECTION DE
PASSAGE DE
L'ELECTROVANNE

TEMPS(ms)

$t_0$    $t$    $t_4$

**B**

DaN

P26=PRESSION DANS LA CAVITE DE COMMANDE 26 ___
P14=PRESSION DANS LA CONDUITE 14 EN AMONT DE L'ENTREE Y___

P26
P14
P14=P26

P26f
P26c
P26o

TEMPS (ms)

$t_1$   $t_2$   $t_3$

**C**

mm
LEVEE
D'AIGUILLE

mm3/ms
DEBIT
INSTAN-
TANNEE

C

$\alpha$

$C_1$

TEMPS(ms)

$T_0$   $T_F$

**0 119 894**

## FIG.3

A — VOLTS ... S/mm²

I(A). ALLURE DU COURANT DE COMMANDE DE L'ELECTROVANNE

B

C — P26, P26f, P26o

D — mm. LEVEE DE L'AIGUILLE D'INJECTEUR

q PREINJECTION    Q PRINCIPAL

0,2 à 0,4ms    T1

T2 = 0,3 à 0,6 ms

3